(19) Europäisches Patentamt / European Patent Office / Office européen des brevets

(11) **EP 3 266 830 B1**

(12) **EUROPEAN PATENT SPECIFICATION**

(45) Date of publication and mention
of the grant of the patent:
**29.06.2022 Bulletin 2022/26**

(21) Application number: **16759014.0**

(22) Date of filing: **03.03.2016**

(51) International Patent Classification (IPC):
**C08L 67/02** (2006.01)  **B65D 77/20** (2006.01)
**C08L 23/06** (2006.01)  **C08L 53/02** (2006.01)
**C08L 67/00** (2006.01)

(52) Cooperative Patent Classification (CPC):
(C-Sets available)
**B65D 77/20; C08L 23/06; C08L 53/02; C08L 67/00;
C08L 67/02**                                          (Cont.)

(86) International application number:
**PCT/JP2016/056649**

(87) International publication number:
**WO 2016/140322 (09.09.2016 Gazette 2016/36)**

(54) **THERMOPLASTIC RESIN COMPOSITION, COVER MEMBER AND EASILY OPENABLE CONTAINER**

THERMOPLASTISCHE HARZZUSAMMENSETZUNG, ABDECKUNGSELEMENT UND LEICHT ZU ÖFFNENDER BEHÄLTER

COMPOSITION DE RÉSINE THERMOPLASTIQUE, ÉLÉMENT DE COUVERCLE ET RÉCIPIENT À OUVERTURE FACILE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.03.2015 JP 2015042802**

(43) Date of publication of application:
**10.01.2018 Bulletin 2018/02**

(73) Proprietor: **MCPP Innovation LLC
Tokyo 100-8251 (JP)**

(72) Inventor: **WATANABE Naoya
Yokkaichi-shi
Mie 510-8530 (JP)**

(74) Representative: **Hoffmann Eitle
Patent- und Rechtsanwälte PartmbB
Arabellastraße 30
81925 München (DE)**

(56) References cited:
JP-A- 2000 185 376    JP-A- 2000 185 376
JP-A- 2006 117 247    JP-A- 2006 117 247
JP-A- 2007 261 181    JP-A- 2007 261 181
JP-A- 2008 087 181    JP-A- 2008 087 181
JP-A- 2015 042 738

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 266 830 B1

(52) Cooperative Patent Classification (CPC): (Cont.)

C-Sets
**C08L 67/00, C08L 23/06, C08L 53/02;**
**C08L 67/02, C08L 23/06, C08L 53/02;**
**C08L 67/02, C08L 67/00, C08L 53/02**

C-Sets
**C08L 67/00, C08L 23/06, C08L 53/02;**
**C08L 67/02, C08L 23/06, C08L 53/02;**
**C08L 67/02, C08L 67/00, C08L 53/02**

**Description**

TECHNICAL FIELD

The present invention relates to a thermoplastic resin composition having an excellent balance between heat seal strength and easy openability and ensuring that a sealing layer excellent in extrusion lamination moldability, peeling appearance, *etc.* can be formed with good moldability. The present invention also relates to a cover member and an easily openable container each obtained by using the thermoplastic resin composition.

BACKGROUND ART

Conventionally, as the packaging technology for food, beverage, chemicals, cosmetics, medical appliances, *etc.*, a method of putting a to-be-packaged material in a container body molded in a tray or cup shape from a resin such as polyester-based resin or polycarbonate-based resin, abutting a cover member to an opening of the container body, and hermetically sealing the opening with a heat seal is being widely employed. Since the cover member must be peeled off in taking out the to-be-packaged material, in addition to no occurrence of leakage, *etc.* of the to-be-packaged material from the container, the package in the form above needs to have heat seal strength to an extent enabling easy peel-off of the cover member from the container body in taking out the to-be-packaged material, that is, to be easily openable.

In general, the sealant (seal material) used for a cover member includes mainly two types, i.e., delamination type and cohesive peeling type. The delamination-type cover member is composed of a sealing layer, a holding layer, and a substrate. In such a cover member, the sealing layer is formed of the same resin as that of the adherend (the cover member-fixing part of a container) so as to keep the sealed state strong by thermal fusion to the adherend, and the holding layer is formed of a resin different from that of the sealing layer so as to facilitate interlayer separation between the sealing layer and the holding layer and thereby impart easy openability.

However, in the delamination-type sealant, a part of the sealant may remain on the container side at the seal breaking, or a film residue may be generated at the seal breaking, and the cohesive peeling-type sealant is advantageous from the viewpoint that the sealant does not have such a problem. The cohesive peeling-type sealant is composed of a sealing layer, a holding layer, and a substrate, similarly to the delamination-type sealant, but the sealing layer is formed of a polymer blend of two resins, i.e., the same resin as the adherend and the same resin as the holding layer. Due to this configuration, the sealing layer is thermally fused, in part, to the adherend at the heat sealing and is separated at the time of peel-off with undergoing a cohesive failure of the sealing layer itself at the interface of polymer-blended resins. Accordingly, the sealing layer plays both functions of sealability and releasability, but the thermal fusion between the sealing layer and the adherend is partial and there is therefore a problem that seal strength of a given level or higher cannot be obtained.

Heretofore, as to the cohesive peeling-type sealant, for example, Patent Document 1 has disclosed a sealant in which the sealing layer is composed of a thermoplastic resin having a specific tensile strength at break and the problem of threading at the time of breaking the seal is thereby solved. Patent Document 2 has disclosed a sealant in which the sealing layer is composed of a lacquer of a polyester-based resin and a urethane-based resin so as to leave uniform imprints on the cover part. Patent Document 3 has disclosed a sealant in which expandable particles are incorporated into the sealing layer so as to enable selective cohesive peeling and prevent peeling failure. Furthermore, Patent Document 4 has disclosed a sealant in which a resin composition containing an ethylene-based copolymer consisting of an ethylene component and a methyl (meth)acrylate component and a polyester resin is used for the sealing layer.

BACKGROUND ART LITERATURE

PATENT DOCUMENT

Patent Document 1: JP-A-2005-335818

Patent Document 2: JP-A-2008-7146

Patent Document 3: JP-A-2013-75718

Patent Document 4: JP-A-2006-117247

## SUMMARY OF THE INVENTION

### PROBLEMS THAT THE INVENTION IS TO SOLVE

Despite the techniques disclosed in Patent Documents 1 to 4, the fact is that a technique sufficiently meeting the requirement of satisfying both easy openability and heat seal strength with ensuring film moldability as a sealing layer has not been provided, and more improvements are demanded. In addition, studies by the present inventors have revealed another problem that even when both easy openability and heat sealability are satisfied, the extrusion lamination moldability sometimes deteriorates.

An object of the present invention is to provide a thermoplastic resin composition having sufficiently high heat seal strength and ensuring that a sealing layer excellent in easy openability, extrusion lamination moldability, peeling appearance, *etc.* can be formed with good moldability, a cover member having a sealing layer composed of the thermoplastic resin composition, and an easily openable container having the cover member.

### MEANS FOR SOLVING THE PROBLEMS

As a result of many intensive studies to achieve the object above, the present inventors have found that when a specific component contributing to fusibility, a component assisting with moldability, and a component contributing to easy openability are blended, the object above can be achieved. The present invention has been accomplished based on this finding. The gist of the present invention resides in the following [1] to [11].

[1] A thermoplastic resin composition containing the following components (A) to (C) and, relative to the total amount thereof, containing from 60 to 84 % by weight of the component (A), from 3 to 23 % by weight of the component (B), and from 3 to 28 % by weight of the component (C).

> Component (A): a crystalline polyester containing an aliphatic dicarboxylic acid unit and having a melting peak temperature in the range of 110 to 140°C
> Component (B): at least either one of a polyolefin and an amorphous polyester
> Component (C): a styrene-based thermoplastic elastomer which is at least one block copolymer out of the group consisting of a block copolymer having a polymer block P derived from a vinyl aromatic compound and a polymer block Q derived from a conjugated diene, and a block copolymer obtained by hydrogenating the block copolymer above and in which the total amount of a 1,2-bond unit and a 3,4-bond unit in the block Q is 60 mol% or more.

[2] The thermoplastic resin composition according to [1], wherein the glass transition temperature of the component (A) is from -50 to -20°C.

[3] The thermoplastic resin composition according to [1] or [2], wherein the component (A) contains an adipic acid unit and a terephthalic acid unit.

[4] The thermoplastic resin composition according to any one of [1] to [3], wherein the component (A) contains a 1,4-butanediol unit.

[5] The thermoplastic resin composition according to any one of [1] to [4], wherein the styrene content of the component (C) is from 5 to 70 % by weight.

[6] The thermoplastic resin composition according to any one of [1] to [5], wherein a polyethylene having a density of 0.850 to 0.980 g/cm$^3$ is contained as the component (B).

[7] The thermoplastic resin composition according to any one of [1] to [6], wherein the following component (D) is contained and the content thereof is from 1 to 15 parts by weight per 100 parts by weight of the total of the component (A), the component (B) and the component (C).
Component (D): an amine-modified styrene-based thermoplastic elastomer.

[8] A cover member having a sealing layer containing the thermoplastic resin composition according to any one of [1] to [7].

[9] The cover member according to [8], wherein the sealing layer is formed by extrusion lamination molding.

[10] An easily openable container containing the cover member according to [8] or [9].

[11] An easily openable container containing the cover member according to [8] or [9] and a container containing a polyethylene terephthalate resin.

### EFFECT OF THE INVENTION

According to the thermoplastic resin composition of the present invention, a sealing layer having sufficiently high heat seal strength and being excellent in easy openability, extrusion lamination moldability, peeling appearance, *etc.* can be formed with good moldability. In addition, by using the thermoplastic resin composition of the present invention, a cover member and an easily openable container, each including a sealing layer having sufficiently high heat seal strength and being excellent in easy openability, extrusion lamination moldability, peeling appearance, *etc.*, are provided.

MODE FOR CARRYING OUT THE INVENTION

Although the embodiment of the present invention is described in detail below, the following description is one example (representative example) of the embodiment of the present invention, and the present invention is not limited to these contents as long as the gist thereof is observed. In the present invention, numerical or physical values expressed by inserting "to" therebetween are used to encompass the values before and after "to".

The thermoplastic resin composition of the present invention contains the following components (A) to (C) and, relative to the total amount thereof, contains from 60 to 84 % by weight of the component (A), from 3 to 23 % by weight of the component (B), and from 3 to 28 % by weight of the component (C). Here, out of the components expected to correspond to the polyester of the component (A), those corresponding to the polyester of the component (B) are not regarded as the component (A) but regarded as the component (B).

> Component (A): A crystalline polyester containing an aliphatic dicarboxylic acid unit and having a melting peak temperature in the range of 110 to 140°C.
> Component (B): At least either one of a polyolefin and an amorphous polyester.
> Component (C): A styrene-based thermoplastic elastomer which is at least one block copolymer out of the group consisting of a block copolymer having a polymer block P derived from a vinyl aromatic compound and a polymer block Q derived from a conjugated diene, and a block copolymer obtained by hydrogenating the block copolymer above and in which the total amount of a 1,2-bond unit and a 3,4-bond unit in the block Q is 60 mol% or more.

In the present invention, the component (A) functions as a component assuming heat sealability and extrusion lamination moldability, the component (B) is a component functioning as a component assisting with moldability in order to improve the moldability and assuming extrusion lamination moldability, and the component (C) is a component assuming easy openability and extrusion lamination moldability.

[Component (A)]

The component (A) for use in the thermoplastic resin composition of the present invention is a polyester containing an aliphatic dicarboxylic acid unit and having a melting peak temperature in the range of 110 to 140°C. The thermoplastic resin composition of the present invention contains the component (A) and is thereby provided with heat sealability and extrusion lamination moldability.

The polyester of the component (A) is produced by an esterification reaction of a dicarboxylic acid containing at least an aliphatic dicarboxylic acid with a polyhydric alcohol or by a transesterification reaction of a dicarboxylic acid ester containing at least an aliphatic dicarboxylic acid ester with a polyhydric alcohol.

The aliphatic dicarboxylic acid unit in the polyester of the component (A) includes, for example, an adipic acid unit, a succinic acid unit, a suberic acid unit, and a sebacic acid unit, and among these, it is preferable to contain an adipic acid unit. The component (A) may contain a dicarboxylic acid unit other than an aliphatic dicarboxylic acid unit, and such a dicarboxylic acid unit includes, for example, an aromatic dicarboxylic acid unit such as terephthalic acid unit, isophthalic acid unit and 2,6-naphthalenedicarboxylic acid, and among these, it is preferable to contain a terephthalic acid unit. Above all, the component (A) preferably contains an adipic acid unit and a terephthalic acid unit and in particular, preferably contains from 10 to 90 mol%, more preferably from 30 to 70 mol%, of an adipic acid unit, relative to the total amount of these units. In this connection, in the case where the component (A) is obtained by a transesterification reaction, the dicarboxylic acid unit is a unit derived from the corresponding alkyl dicarboxylic acid ester.

The polyhydric alcohol unit in the component (A) is preferably a diol unit, and the diol unit includes, for example, an ethylene glycol unit, a 1,4-butanediol unit, a 1,4-cyclohexanedimethanol unit, a pentaethylene glycol unit, a 2,2-dimethyltrimethylene glycol unit, a hexamethylene glycol unit, a neopentyl glycol unit, a polyethylene glycol unit, a polypropylene glycol unit, and a polytetramethylene ether glycol unit. Among these, it is preferable to contain an aliphatic diol unit having a carbon number of 2 to 8, such as ethylene glycol unit, 1,4-butanediol unit or 1,4-cyclohexanedimethanol unit, and it is more preferable to contain a 1,4-butylene glycol unit.

The polyester of the component (A) for use in the present invention has a melting peak temperature of 140°C or less and therefore, has a function of thermally fusing to an adherend at a low temperature in the range of not more than the temperature above. From the viewpoint of more successfully bringing out this function, the melting peak temperature of the component (A) is preferably 135°C or less. On the other hand, the polyester of the component (A) has a melting peak temperature of 110°C or more and therefore, has a function of preventing separation of the sealant layer (reduction in the peel strength) at the time of heat-treating the container (easily openable container) or injecting a high-temperature material into the container. From the viewpoint of more successfully bringing out this function, the melting peak temperature of the component (A) is preferably 115°C or more.

Furthermore, in view of blocking resistance of the film for the sealing layer composed of the thermoplastic resin composition, the glass transition temperature (Tg) of the component (A) is preferably -50°C or more. From this viewpoint, the glass transition temperature of the component (A) is more preferably -45°C or more, still more preferably -40°C or more. On the other hand, the upper limit of the glass transition temperature (Tg) of the component (A) is not particularly limited but is preferably -20°C or less.

Here, the melting peak temperature and glass transition temperature of the component (A) can be measured in conformity with JIS K7121 (1987). Specifically, the melting behavior of the polyester resin is measured using a differential scanning calorimeter (DSC6220, manufactured by SSI NanoTechnology Inc.) by sequentially conducting the following steps (1) to (3). A melting curve is obtained in each step by plotting the time on the abscissa and the melting heat quantity on the ordinate, and the peak observed in the step (2) and the peak observed in the step (3) are defined as the crystallization peak and the melting peak, respectively.

Step (1): The temperature of about 6 mg of the sample is raised to 170°C at a rate of 100°C/min from room temperature and after the completion of temperature rise, held for 3 minutes.

Step (2): The temperature is lowered to -80°C at a rate of 10°C/min from 170°C and after the completion of temperature drop, held for 3 minutes.

Step (3): The temperature is raised to 170°C at a rate of 10°C/min from -80°C.

The crystalline polyester of the component (A) is available as a commercial product. For example, "ECOFLEX (registered trademark)" of BASF can be used. Here, as for the crystalline polyester of the component (A), one kind of a polyester may be used, or two or more polyesters differing in the dicarboxylic acid or diol component or in the physical properties such as glass transition temperature may be used in combination.

[Component (B)]

The component (B) for use in the present invention is at least either one of a polyolefin and an amorphous polyester and functions as a component assisting with moldability and as a component assuming extrusion lamination moldability. As for the component (B), only one polyolefin or one amorphous polyester may be used, or one polyolefin or two or more polyolefins may be used in combination with one amorphous polyester or two or more amorphous polyester, but in view of extrusion lamination moldability, it is particularly preferable to contain a polyolefin as the component (B).

<Polyolefin>

The polyolefin usable as the component (B) includes, for example, a homopolymer or copolymer of an olefin having a carbon number of approximately from 2 to 20, such as ethylene, propylene, butene-1, pentene-1 or hexene 1, and a copolymer of such an olefin and a copolymerizable vinyl monomer, for example, an unsaturated organic acid or an anhydride thereof, such as vinyl acetate, acrylic acid ester, methacrylic acid, methacrylic acid ester or maleic anhydride. In the copolymer of an olefin and a copolymerizable vinyl monomer, the content of the olefin unit is 50 % by weight or more. The copolymer as used herein encompasses random, block and graft copolymers.

The polyolefin usable as the component (B) includes, more specifically, for example, a polyethylene produced by a high-pressure, medium-pressure or low-pressure process, a polypropylene, an ethylene-propylene random copolymer, an ethylene·propylene block copolymer, a propylene·butene-1 random copolymer, a propylene·ethylene·butene-1 random copolymer, a copolymer composed of a propylene, an $\alpha$-olefin having a carbon number of 5 to 12 and, depending on the case, ethylene or butene-1, and an ethylene·vinyl acetate copolymer. Among these, a polyethylene, a polypropylene, an ethylene vinyl acetate copolymer, *etc.* is preferred, and a polyethylene such as high-density polyethylene, low-density polyethylene or linear polyethylene is more preferred. The "polypropylene" as used herein means a polyolefin containing more than 50 % by weight of a propylene unit as a constituent unit, and the "polyethylene" means a polyolefin containing more than 50 % by weight of an ethylene unit as a constituent unit. In view of moldability, the component (B) is preferably a polyethylene, among others.

In the polypropylene usable as the component (B), in view of moldability, the melt flow rate (MFR) as measured at 230°C under a load of 2.16 kg in conformity with JIS K7210 (2014) is preferably from 1.0 to 60 g/10 min, more preferably from 2.0 to 40 g/10 min.

In the polyethylene usable as the component (B), in view of moldability, the melt flow rate (MFR) as measured at 190°C under a load of 2.16 kg in conformity with JIS K7210 (2014) is preferably from 1.0 to 60 g/10 min, more preferably from 2.0 to 40 g/10 min. In addition, in view of heat resistance, the density [JIS K7112 (1999)] of the polyethylene is preferably from 0.850 to 0.980 g/cm$^3$, more preferably from 0.855 to 0.950 g/cm$^3$, still more preferably from 0.860 to 0.930 g/cm$^3$.

In the ethylene·vinyl acetate copolymer usable as the component (B), in view of moldability, the melt flow rate (MFR) as measured at 190°C under a load of 2.16 kg in conformity with JIS K7210 (2014) is preferably from 1.0 to 60 g/10 min, more preferably from 2.0 to 40 g/10 min.

As for the polyolefin of the component (B), out of polyolefins recited above, one kind may be used or two or more kinds of polyolefins differing in the raw material composition or physical properties may be used in combination.

The polyolefin of the component (B) is available as a commercial product. The polypropylene includes, for example, NOVATEC (registered trademark) PP Series and WINTEC (registered trademark) Series, produced by Japan Polypropylene Corp., and a relevant product may be appropriately selected from these commercial products and used. The polyethylene includes, for example, NOVATEC (registered trademark) Series produced by Japan Polypropylene Corp., and CREOLEX (registered trademark) Series produced by Asahi Kasei Chemicals Corp., and a relevant product may be appropriately selected from these commercial products and used.

<Amorphous Polyester>

The amorphous polyester usable as the component (B) is a polyester exhibiting substantially no crystallinity. In particular, the polyester is a polyester which does not have a clear melting peak temperature in the temperature range of 50 to 300°C at the measurement by the differential scanning calorimeter described above regarding the component (A) and specifically, means a polyester in which the crystal melting heat quantity (ΔH) is 1 J/g or less in the temperature range above.

The amorphous polyester usable in the component (B) includes, for example, at least either one of a polyester rendered amorphous by replacing a terephthalic acid unit of a polyethylene terephthalate by another dicarboxylic acid unit and a polyester rendered amorphous by replacing a part of an ethylene glycol unit of a polyethylene terephthalate by another diol unit. The dicarboxylic acid unit as used herein means a unit derived from a dicarboxylic acid in the case of an amorphous polyester produced by an esterification reaction, and means a unit derived from a dicarboxylic acid diester in the case of an amorphous polyester produced by a transesterification reaction.

In such an amorphous polyester, the carboxylic acid unit other than a terephthalic acid unit includes, for example, an alicyclic dicarboxylic acid unit such as 1,2-cyclohexanedicarboxylic acid unit, 1,3-cyclohexanedicarboxylic acid unit, 1,4-cyclohexanedicarboxylic acid unit, 1,4-decahydronaphthalenedicarboxylic acid unit and 1,5-decahydronaphthalenedicarboxylic acid unit; an aromatic dicarboxylic acid unit such as phthalic acid unit, isophthalic acid unit, phenylenedioxydicarboxylic acid unit, 4,4'-diphenyldicarboxylic acid unit, 4,4'-diphenylether dicarboxylic acid unit, 4,4'-diphenylketone dicarboxylic acid unit, 4,4'-diphenoxyethane dicarboxylic acid unit, 4,4'-diphenylsulfone dicarboxylic acid unit and 2,6-naphthalenedicarboxylic acid unit; an aliphatic dicarboxylic acid unit such as succinic acid unit, glutaric acid unit, adipic acid unit, pimelic acid unit, suberic acid unit, azelaic acid unit, sebacic acid unit, undecadicarboxylic acid unit and dodecadicarboxylic acid unit. Only one of these dicarboxylic acid units may be contained, or two or more thereof may be contained.

The diol unit other than an ethylene glycol unit includes, for example, a 5-membered ring diol unit such as 1,2-cyclopentanediol unit, 1,3-cyclopentanediol unit, 1,2-cyclopentanedimethanol-bis(hydroxymethyl)tricyclo[5.2.1.0]decane unit and 1,3-cyclopentanedimethanol-bis(hydroxymethyl)tricyclo[5.2.1.0]decane unit; a cyclohexanedimethanol unit such as 1,2-cyclohexanediol unit, 1,3-cyclohexanediol unit, 1,4-cyclohexanediol unit, 1,2-cyclohexanedimethanol (1,2-CHDM) unit, 1,3-cyclohexanedimethanol (1,3-CHDM) unit, 1,4-cyclohexanedimethanol (1,4-CHDM) unit and 2,2-bis-(4-hydroxycyclohexyl)propane unit; an aliphatic diol unit such as trimethylene glycol unit, 1,4-butanediol unit, pentamethylene glycol unit, hexamethylene glycol unit, octamethylene glycol unit, decamethylene glycol unit, neopentyl glycol unit and diethylene glycol unit; and an aromatic diol unit such as xylylene glycol unit, 4,4'-hydroxybiphenyl unit, 2,2-bis(4'-hydroxyphenyl)propane unit, 2,2-bis(4'-β-hydroxyethoxyphenyl)propane unit, bis(4-hydroxyphenyl)sulfone unit and bis(4-β-hydroxyethoxyphenyl)sulfone unit. Among these, it is preferable to contain a cyclohexanedimethanol unit as the diol unit. Only one of these diol units may be contained, or two or more thereof may be contained.

Above all, the amorphous polyester usable in the component (B) is preferably a polyethylene terephthalate containing a cyclohexanedimethanol unit as the diol unit. In particular, it is preferable to contain 80 mol% or more of a terephthalic acid unit relative to all dicarboxylic acid units and contain from 60 to 80 mol% of an ethylene glycol unit and from 20 to 40 mol% of a cyclohexanedimethanol unit relative to all diol units.

The glass transition temperature (Tg) of the amorphous polyester of the component (B) is preferably 45°C or more, more preferably 55°C or more. In view of heat resistance, the glass transition temperature of the amorphous polyester is preferably not less than the lower limit value above. In addition, the glass transition temperature of the amorphous polyester is preferably 90°C or less, more preferably 80°C or less. When the glass transition temperature of the amorphous polyester is not more than the upper limit value above, the transparency is excellent due to decrease in the crystallinity, and the heat sealability is also excellent. Here, the glass transition temperature can be measured in a conventional manner by using a differential scanning calorimeter (DSC), similarly to the component (A), and means a temperature at the inflection point of heat flow when measured at a temperature rise rate of 10°C/min. The glass transition temperature of the amorphous polyester can be controlled by appropriately selecting the above-described dicarboxylic acid unit and diol unit.

The intrinsic viscosity (IV) of the amorphous polyester of the component (B) is not particularly limited, but in view of ease of molding and processing, the intrinsic viscosity is preferably lower, because the melt viscosity also becomes lower. Specifically, the intrinsic viscosity (IV) determined by dissolving the amorphous polyester in a phenol/tetrachloroethane (weight ratio: 1/1) mixed solution as a solvent and measuring the viscosity at 30°C by means of an Ubbelohde viscometer is preferably 1.5 dL/g or less and in view of physical properties such as strength, preferably 0.3 dL/g or more.

The amorphous polyester of the component (B) is available as a commercial product. For example, a relevant product may be selected from "Easter (registered trademark) copolyester" series produced by Eastman Chemical Company and used.

[Component (C)]

The component (C) for use in the present invention is a styrene-based thermoplastic elastomer which is at least one block copolymer out of the group consisting of a block copolymer having a polymer block P derived from a vinyl aromatic compound and a polymer block Q derived from a conjugated diene, and a block copolymer obtained by hydrogenating the block copolymer above and in which the total amount of a 1,2-bond unit and a 3,4-bond unit in the block Q is 60 mol% or more. In the present invention, the component (C) is a component contributing to easy openability and extrusion lamination moldability of the thermoplastic resin composition.

In the component (C), the total ratio of 1,2-bond unit, i.e., 1,2-additive structure, and 3,4-bond unit, i.e., 3,4-additive structure, to all conjugated diene units of the block Q is 60 mol% or more, and the thermoplastic resin composition is thereby provided with good extrusion lamination moldability. From this viewpoint, the total ratio of 1,2-bond unit and 3,4-bond unit is preferably 62 mol% or more, more preferably 64 mol% or more, and still more preferably 66 mol% or more. On the other hand, the upper limit of the total amount of 1,2-bond unit and 3,4-bond unit is not particularly limited and is usually 100 mol%. The ratio of each of 1,2-bond unit and 3,4-bond unit can be measured by $^{13}$C-NMR.

In the component (C), the vinyl aromatic compound of the monomer constituting the block P is not particularly limited but is preferably styrene or a styrene derivative such as α-methylstyrene. Among these, it is preferred that the block is mainly composed of styrene. The "mainly composed of" as used in the present invention means that the content is 50 % by weight or more. In this connection, the block P may contain, as a raw material, a monomer other than the vinyl aromatic compound.

The monomer other than the vinyl aromatic compound includes, for example, ethylene and α-olefin. In the case where the block P contains, as a raw material, a monomer other than the vinyl aromatic compound, the content thereof is preferably less than 50 % by weight and preferably 40 % by weight or less. When the content of the monomer other than the vinyl aromatic compound is not more than the upper limit above, it is likely that the heat resistance and compression set are thereby improved.

In the component (C), the block Q is derived from a conjugated diene. Although the conjugated diene of the monomer usable for the block Q is not particularly limited, it is preferred that the block is mainly composed of at least either one of butadiene and isoprene. In this connection, the block Q may contain, as a raw material, a monomer other than the conjugated diene.

The monomer other than the conjugated diene includes, for example, isobutylene and styrene. In the case where the block Q contains, as a raw material, a monomer other than the conjugated diene, the content thereof is preferably less than 50 % by weight, preferably 40 % by weight or less. When the content of the monomer other than the conjugated diene is not more than the upper limit above, bleed-out tends to be suppressed.

The block copolymer of the component (C) may be a hydrogenated block copolymer obtained by hydrogenating the block copolymer having the polymer block P and the polymer block Q, more specifically, may be a hydrogenated block copolymer in which the double bond in the block Q of the block copolymer is hydrogenated. The hydrogenation rate of the block Q is not particularly limited but is preferably from 80 to 100 % by weight, more preferably from 90 to 100 % by weight. By hydrogenating the block Q in the range above, the obtained thermoplastic resin composition tends to be reduced in the adhesive property and increased in the elastic property. The same applies to the case where the block P uses a diene component as a raw material. The hydrogenation rate can be measured by $^{13}$C-NMR.

In this connection, in the case where the conjugated diene unit of the monomer unit constituting the block Q is a butadiene unit, the butadiene unit may have a 1,4-additive structure and a 1,2-additive structure, but particularly when the block Q is a hydrogenated derivative and is mainly composed of butadiene, the ratio of the 1,2-additive structure (the ratio of 1,2-bond unit) in the butadiene unit of the block Q is 60 mol% or more.

In the case where the conjugated diene unit of the monomer constituting the block Q is an isoprene unit, the isoprene unit may have a 1,2-additive structure, a 1,4-additive structure and a 3,4-additive structure, but similarly to the above, particularly when the block Q is a hydrogenated derivative and the block Q is composed of an isoprene unit, the ratio of the 1,2-additive structure and 3,4-additive structure (the total ratio of 1,2-bond unit and 3,4-bond unit) in the isoprene unit of the block Q is 60 mol% or more.

In the following, the ratio of 1,2-bond unit in the block Q is sometimes referred to as "1,2-bond amount", and the ratio of 3,4-bond unit is sometimes referred to as "3,4-bond amount".

With respect to the component (C) in the present invention, as long as the total amount of 1,2-bond unit and 3,4-bond unit in the block Q is 60 mol% or more, the structure thereof is not particularly limited and may take any of, e.g., linear, branched and radial forms, but a block copolymer represented by the following formula (1) or (2) is preferred. Furthermore, the block copolymer represented by the following formula (1) or (2) is more preferably a hydrogenated block copolymer obtained by hydrogenation. When the copolymer represented by the following formula (1) or (2) is a hydrogenated block copolymer, the thermal stability is improved.

$$P\text{-}(Q\text{-}P)_m \qquad\qquad (1)$$

$$(P\text{-}Q)_n \qquad\qquad (2)$$

(wherein P represents the polymer block P, Q represents the polymer block Q, m represents an integer of 1 to 5, and n represents an integer of 2 to 5).

In the formula (1) or (2), m and n are preferably a larger integer from the viewpoint of lowering the order-disorder transition temperature as a rubbery high polymer and are preferably a smaller integer in view of ease and cost of production.

As for the at least either one of a block copolymer and a hydrogenated block copolymer (hereinafter, sometimes referred to as "(hydrogenated) block copolymer") of the component (C), because of excellent rubber elasticity, a (hydrogenated) block copolymer represented by the formula (1) is more preferable than a (hydrogenated) block copolymer represented by the formula (2); a (hydrogenated) block copolymer represented by the formula (1) where m is 3 or less is more preferred; a (hydrogenated) block copolymer represented by the formula (1) where m is 2 or less is still more preferred; and a (hydrogenated) block copolymer represented by the formula (1) where m is 1 is most preferred.

The weight ratio between block P and block Q constituting the component (C) is arbitrary, but in view of mechanical strength and thermal fusion strength of the thermoplastic resin composition of the present invention, the proportion of block P is preferably larger, and on the other hand, in view of flexibility and suppression of bleed-out, the proportion of block P is preferably smaller. From these viewpoints, the content of block P in the component (C) is preferably 5 % by weight or more, more preferably 8 % by weight or more, and on the other hand, is preferably 70 % by weight or less, more preferably 50 % by weight or less, and still more preferably 30 % by weight or less.

Above all, in the styrene-based thermoplastic elastomer of the component (C), from the viewpoint of providing better moldability, the styrene content is preferably 70 % by weight or less, more preferably 50 % by weight or less, and still more preferably 30 % by weight or less. On the other hand, the lower limit of the styrene content is preferably 5 % by weight or more, and more preferably 8 % by weight or more. Here, the "styrene content" in the component (C) as used in the present invention includes not only the content of styrene unit but also the content of a constituent unit in which a hydrogen atom bonded to an aromatic ring of styrene unit is replaced by another atom or atomic group. The styrene content can be measured by $^{13}$C-NMR.

The production method for the component (C) in the present invention is not particularly limited and may be any method as long as the above-described structures and physical properties are obtained. Specifically, the block copolymer can be obtained, for example, by performing block polymerization in an inert solvent with use of a lithium catalyst, *etc.* by the method described in JP-B-40-23798. In addition, the hydrogenation (hydrogen addition) of the block copolymer can be performed in an inert solvent in the presence of a hydrogenation catalyst, for example, by the method described in JP-B-42-8704, JP-B-43-6636, JP-A-59-133203, JP-A-60-79005, *etc.* In this hydrogenation treatment, 50% or more of olefinic double bonds in the polymer block are preferably hydrogenated, and it is more preferred that 80% or more are hydrogenated.

Although the melt flow rate (MFR) of the component (C) is not particularly limited, MFR [230°C, 2.16 kgf(JIS K7210) (2014)] is usually 0.1 g/10 min or more, preferably 0.5 g/10 min or more, more preferably 1 g/10 min or more, and on the other hand, is preferably 50 g/10 min or less, more preferably 30 g/10 min or less, still more preferably 15 g/10 min or less. When MFR of the component (C) is in the range above, good moldability tends to be obtained.

The number average molecular weight (Mn) of the component (C) in the present invention is not particularly limited but is preferably 30,000 or more, more preferably 50,000 or more, still more preferably 80,000 or more, and is preferably 500,000 or less, more preferably 400,000 or less, still more preferably 300,000 or less. When the number average molecular weight of the component (C) is in the range above, the moldability and heat resistance are likely to be enhanced.

The weight average molecular weight (Mw) of the component (C) is not particularly limited but is preferably 30,000 or more, more preferably 40,000 or more, still more preferably 50,000 or more, and is preferably 550,000 or less, more preferably 500,000 or less, still more preferably 400,000 or less. When the weight average molecular weight of the component (C) is in the range above, the moldability and heat resistance are likely to be enhanced.

In the present invention, the weight average molecular weight (Mw) and number average molecular weight (Mn) of the component (C) are a value in terms of polystyrene as determined through measurement by gel permeation chromatography (GPC), and the measurement conditions are as follows.

(Measurement Conditions)

Instrument: "HLC-8120GPC" manufactured by Tosoh Corp.
Column: "TSKgel Super HM-M" manufactured by Tosoh Corp.
Detector: differential refractive index detector (RI detector/incorporated)
Solvent: chloroform
Temperature: 40°C
Flow velocity: 0.5 mL/min
Injection volume: 20 μL
Concentration: 0.1 % by weight
Calibration data: monodisperse polystyrene
Calibration method: polystyrene basis

Although the hardness (Shore A) by JIS K6253 (1993) of the component (C) is not limited, it is preferably 20 or more, more preferably 25 or more, still more preferably 30 or more, and on the other hand, is preferably 95 or less, more preferably 80 to less, still more preferably 65 or less. When the hardness of the component (C) is in the range above, good flexibility tends to be obtained.

As for the commercial product of such a hydrogenated block copolymer, a relevant product may be appropriately selected from, for example, "KRATON (registered trademark)-G Series" produced by Kraton Corp. and "Tuftec (registered trademark) Series" produced by Asahi Kasei Corp. and used.

[Component (D)]

From the viewpoint of obtaining easy openability and good peeling appearance, the thermoplastic resin composition of the present invention preferably contains the following component (D). This is considered to be preferable because the dispersion diameters of the component (A) and the component (B) are reduced to a fine diameter by the component (D). Here, in the present invention, out of the components understood to be the component (D), those corresponding to the component (C) are not regarded as the component (D) but regarded as the component (C).

Component (D): An amine-modified styrene-based thermoplastic elastomer.

The styrene-based thermoplastic elastomer used as a raw material for amine modification is not limited but usually, an elastomer having a polymer block mainly composed of a vinyl aromatic compound and a polymer block providing flexibility is used. Specifically, the elastomer includes, for example, at least either one of a block copolymer having a polymer block mainly composed of a vinyl aromatic compound and a polymer block mainly composed of at least either one of butadiene and isoprene, and a hydrogenated block copolymer obtained by hydrogenating the block copolymer above.

The "polymer mainly composed of a vinyl aromatic compound" as used herein means a polymer obtained by polymerizing a monomer mainly composed of a vinyl aromatic compound and hereinafter, is sometimes simply referred to as "polymer block P'" or "block P'". In addition, the "polymer mainly composed of butadiene and/or isoprene" means a polymer obtained by polymerizing a monomer mainly composed of butadiene and/or isoprene and hereinafter, is sometimes simply referred to as "polymer block Q'" or "block Q'". The "mainly composed of" as used herein means that the content is 50 % by weight or more. At least either one of a block copolymer having a polymer block P' and a polymer block Q', and a hydrogenated block copolymer obtained by hydrogenating the block copolymer above, is preferred.

The vinyl aromatic compound of the monomer constituting the polymer block P' is not limited but is preferably styrene or a styrene derivative such as α-methylstyrene. Among these, it is preferred that the block is mainly composed of styrene. In this connection, the polymer block may contain, as a raw material, a monomer other than the vinyl aromatic compound.

The monomer constituting the block Q' is more preferably any one of butadiene alone, isoprene alone, and butadiene and isoprene. In this connection, the block Q' may contain, as a raw material, a monomer other than butadiene and isoprene. In addition, the block Q' may be a hydrogenated derivative obtained by hydrogenating the double bond possessed after polymerization. The hydrogenation rate of the block Q' is not limited but is preferably from 50 to 100 % by weight, more preferably from 80 to 100 % by weight. By hydrogenating the block Q' in the range above, the thermal stability of the thermoplastic resin composition of the present invention tends to be enhanced. The same applies to the case where the block P uses a diene component as a raw material. The hydrogenation rate can be measured by $^{13}$C-NMR.

Although the weight ratio of the block P' in the styrene-based thermoplastic elastomer is not limited, it is is usually 5 % by weight or more, preferably 8 % by weight or more, and still more preferably 10 % by weight or more, and on the other hand, is usually 55 % by weight or less, preferably 50 % by weight or less, and more preferably 45 % by weight or less. When the weight ratio of the block P' is in the range above, the adhesive property of the thermoplastic resin composition of the present invention tends to be enhanced.

In the case where a copolymer having the block P' and the block Q' is used as the styrene-based thermoplastic elastomer, the chemical structure thereof may take any of, e.g., linear, branched and radial forms, but the copolymer is preferably a block copolymer represented by the following formula (3) or (4), and in view of adhesive property, the structure of formula (3) is more preferred.

Furthermore, the block copolymer represented by the following formula (3) or (4) is more preferably a hydrogenated derivative, i.e., a hydrogenated copolymer. When the copolymer represented by the following formula (3) or (4) is a hydrogenated block copolymer, the adhesive property of the thermoplastic resin composition of the present invention tends to be improved.

$$P'\text{-}(Q'\text{-}P')_{m'} \qquad\qquad (3)$$

$$(P'\text{-}Q')_{n'} \qquad\qquad (4)$$

(wherein P' represents the polymer block P', Q' represents the polymer block Q', m' represents an integer of 1 to 5, and n' represents an integer of 2 to 5).

In the formula (3) or (4), m' and n' are preferably a larger integer from the viewpoint of lowering the order-disorder transition temperature as a rubbery high polymer and are preferably a smaller integer in view of ease and cost of production.

As for the block copolymer or hydrogenated block copolymer (hereinafter, sometimes referred to as "(hydrogenated) block copolymer"), because of excellent rubber elasticity, a (hydrogenated) block copolymer represented by the formula (4) is more preferable than a (hydrogenated) block copolymer represented by the formula (3); a (hydrogenated) block copolymer represented by the formula (3) where m' is 3 or less is more preferred; and a (hydrogenated) block copolymer represented by the formula (3) where m' is 2 or less is still more preferred.

The production method for the styrene-based thermoplastic elastomer used as a raw material for amine modification is not particularly limited and may be any method as long as the above-described structures and physical properties are obtained, and the method includes the same method as the production method for a styrene-based thermoplastic elastomer of the component (C). Specifically, the block copolymer can be obtained, for example, by performing block polymerization in an inert solvent by use of a lithium catalyst, *etc*. In addition, as for the hydrogenation (hydrogen addition) of the block copolymer, a known method of, for example, performing the hydrogenation in an inert solvent in the presence of a hydrogenation catalyst may be employed.

The component (D) in the present invention is obtained by modifying the above-described styrene-based thermoplastic elastomer with an amine compound. The method for amine modification of the styrene-based thermoplastic elastomer is not particularly limited and includes, for example, as recited in JP-A-2007-154014, a method of polymerizing a (hydrogenated) block copolymer by using an amino group-containing polymerization initiator, a method of performing amine modification of a (hydrogenated) block copolymer by using an amino group-containing unsaturated monomer as a raw material to be copolymerized, and a method of performing amine modification by reacting an amino group-containing polymerization terminator with an active site of a (hydrogenated) block copolymer. One of these methods may be performed alone, or a plurality of methods may be performed in combination.

Furthermore, the method for amine modification of a styrene-based thermoplastic elastomer also includes, for example, a method of synthesizing, as a raw material of a styrene-based thermoplastic elastomer, a (hydrogenated) block copolymer containing a chloromethylstyrene unit by using chloromethylstyrene, and reacting an amine compound with the chloromethyl group, thereby performing amine modification of a styrene-based thermoplastic elastomer. At this time, the amine compound used for modification is not limited but specifically includes, for example, alkylamines, alkenylamines, arylamines, arylalkylamines, cyclic alkylamines and heterocyclic amines. The alkylamines include, for example, methylamine, ethylamine, propylamine, isopropylamine, n-butylamine, secbutylamine, isobutylamine, tert-butylamine, and pentylamine. The alkenylamines include, for example, dodecenylamine, octadecenylamine, and dococenylamine. The arylamines include, for example, aniline, methylaniline, ethylaniline, p-isopropylaniline, and N-methylaniline. The arylalkylamines include, for example, benzylamine, 1-phenylethylamine, and 2-phenylethylamine. The cyclic alkylamines include, for example, cyclohexylamine and dicyclohexylamine. The heterocyclic amines include, for example, thienylamine and quinolylamine. One of these amine compounds may be used alone, or two or more thereof may be appropriately selected and used in combination.

The method for reacting an mine compound with a styrene-based thermoplastic elastomer is not limited and includes, for example, a method of performing the reaction in an organic solvent (solution method), and a method of performing melt-kneading with use of an extruder, *etc.* (melt-kneading method). As to the solvent when performing amine modification by using a solvent method, for example, a solvent in which both the styrene-based thermoplastic elastomer and the amine compound are soluble, such as dimethylsulfoxide (DMSO), N-methylpyrrolidone (NMP) and N,N-diethylformamide, may be suitably used. Although the temperature at the time of amine modification may be appropriately determined according to the kind of the solvent used or the kind of the amine compound, the amine modification is usually performed at 0 to 150°C. In performing the modification, a radical generator or a reaction accelerator may be added. In the case of performing amine modification by a melt-kneading method, usually, the melt-kneading may be performed by adding a radical generator, in addition to the styrene-based thermoplastic elastomer and the amine compound.

The number average molecular weight (Mn) of the amine-modified styrene-based thermoplastic elastomer of the component (D) is not limited but is usually 250,000 or less, preferably 150,000 or less, more preferably 120,000 or less, and still more preferably 100,000 or less. In addition, although the number average molecular weight (Mn) of the amine-modified styrene-based thermoplastic elastomer is not limited, it is usually 20,000 or more, preferably 40,000 or more, more preferably 50,000 or more. When the number average molecular weight (Mn) of the amine-modified styrene-based thermoplastic elastomer is in the range above, good moldability tends to be obtained. The number average molecular weight (Mn) of the amine-modified styrene-based thermoplastic elastomer is a value in terms of polystyrene as measured by GPC and is measured in the same manner as that of the styrene-based thermoplastic elastomer of the component (C).

The melt flow rate (MFR) by ISO 1133 (2011) of the component (D) is not limited but, as a value at 230°C under a load of 2.16 kgf, is preferably 0.1 g/10 min or more, more preferably 0.3 g/10 min or more, and still more preferably 0.5 g/10 min or more, and is preferably 100 g/10 min or less, more preferably 50 g/10 min or less, and still more preferably 30 g/10 min or less. When MFR of the component (D) is in the range above, good moldability tends to be obtained.

The glass transition temperature by ISO 11357-2 (2013) of the component (D) is not limited but is preferably -80°C or more, and more preferably -70°C or more, and on the other hand, is preferably 30°C or less, more preferably 20°C or less, and still more preferably 0°C or less. When the glass transition temperature of the component (D) is in the range above, the blocking resistance of the film for the sealing layer composed of the thermoplastic resin composition of the present invention tends to be good.

Although the hardness (Shore A) by ISO 868 (2003) of the component (D) is not limited but is preferably 50 or more, more preferably 60 or more, and still more preferably 75 or more, and on the other hand, is preferably 95 or less, more preferably 90 to less, and still more preferably 85 or less. When the hardness of the component (D) is in the range above, good flexibility tends to be obtained.

The density by ISO 1183 (2012) of the component (D) is usually from 0.86 to 0.93 g/cm$^3$, and preferably from 0.87 to 0.92 g/cm$^3$. When the density of the component (D) is in the range above, this is preferred in view of moldability.

In the present invention, with respect to the amine-modified styrene-based thermoplastic elastomer used as the component (D), a commercial product may also be used. As the commercial product, a relevant product may be appropriately selected, for example, from "DYNARON (registered trademark)" produced by JSR Corp. and "Tuftec (registered trademark)" produced by Asahi Kasei Chemicals Corp. and used.

[Other Components]

In addition to the component (A), the component (B), the component (C) and the component (D) used as needed, the thermoplastic resin composition of the present invention may contain other components. Other components include, for example, an additive such as slipping agent, coloring agent (e.g., dye, pigment), stabilizer, plasticizer (excluding those falling under the slipping agent), antioxidant, light stabilizer (e.g., ultraviolet absorber), dispersant, thickener, desiccant, lubricant and antistatic agent; a filler such as inorganic filler and organic filler; and a resin such as polycarbonate resin, polymethyl methacrylate resin, polyester resin [excluding those falling under the component (A) and the component (B)], vinyl chloride resin, olefin-based thermoplastic elastomer, styrene-based thermoplastic elastomer [excluding those falling under the component (C) and the component (D)], polyester-based thermoplastic elastomer [excluding those falling under the component (A) and the component (B)] and polyurethane-based thermoplastic elastomer.

Out of other components, the slipping agent is effective in enhancing the moldability. As the slipping agent, known slipping agents may be used without any particular limitation. Specifically, the slipping agent includes, for example, a paraffin such as paraffin oil and solid paraffin; a higher fatty acid such as stearic acid and palmitic acid; a higher alcohol such as palmityl alcohol and stearyl alcohol; a metal salt of fatty acid, such as calcium stearate, zinc stearate, barium stearate, aluminum stearate, magnesium stearate and sodium palmitate; a fatty acid ester such as butyl stearate, glycerin monostearate and diethylene glycol monostearate; a fatty acid amide such as stearamide, methylenebisstearamide, ethylenebisstearamide, ethylene diamide of oxystearic acid, methylolamide, oleylamide, stearic aid amide and erucic acid amide; and waxes such as carnauba wax and montan wax. Incidentally, one of slipping agents and waxes may be used alone, or two or more thereof may be used in an arbitrary ratio in any combination. Among these, erucic acid amide is preferred.

[Blending Amount]

The thermoplastic resin composition of the present invention contains the component (A), the component (B), and the component (C), whereby the effect in terms of heat seal strength, easy openability and moldability such as extrusion lamination moldability can be obtained. From the viewpoint of successfully obtaining these effects, the thermoplastic resin composition of the present invention contains, relative to the total amount of the components (A) to (C), from 60 to 84 % by weight of the component (A), from 3 to 23 % by weight of the component (B), and from 3 to 28 % by weight of the component (C), and it is preferable to contain from 65 to 80 % by weight of the component (A), from 7 to 23 % by weight of the component (B), and from 9 to 23 % by weight of the component (C).

When the content ratio of the component (A) as a component assuming heat sealability and extrusion lamination moldability is not less than the lower limit value above, the heat seal strength tends to be more enhanced, and when it is not more than the upper limit value above, the content ratio of the components (B) and (C) becomes relatively high and the easy openability and moldability tend to be more improved. In addition, when the content ratio of the component (B) as a component assisting with moldability is not less than the lower limit value above, the moldability tends to be more improved, and when it is not more than the upper limit value above, the content ratio of the components (A) and (C) becomes relatively high by which the heat seal strength, extrusion lamination moldability and easy openability tend to be more improved. Furthermore, when the content ratio of the component (C) as a component assuming easy openability and extrusion lamination moldability is not less than the lower limit value above, not only the easy openability tends to be more good but also the extrusion lamination moldability is likely to be good, and when it is not more than the upper limit value above, the content ratio of the components (A) and (B) becomes relatively high and in turn, the heat seal strength and moldability tend to be better.

In the case where the thermoplastic resin composition of the present invention contains the component (D), from the viewpoint of obtaining an effect in terms of cohesive peelability (easy openability) and improvement of peeling appearance, the content thereof is preferably 1 part by weight or more, more preferably 3 parts by weight or more, and still more preferably 5 parts by weight or more, per 100 parts by weight of the total of the components (A) to (C). On the other hand, from the viewpoint of effectively obtaining the above-described functions by the components (A) to (C), the content of the component (D) is preferably 15 parts by weight or less, more preferably 13 parts by weight or less, still more preferably 10 parts by weight or less, per 100 parts by weight of the total of the components (A) to (C).

In the case where the thermoplastic resin composition of the present invention contains other components besides the components (A) to (D), in order to sufficiently obtain the functions by the components (A) to (C), the content of other components in the thermoplastic resin composition is, in total, preferably 30 % by weight or less, more preferably 20 % by weight or less, and still more preferably 10 % by weight or less, relative to the thermoplastic resin composition as a whole. In the case where the thermoplastic resin composition of the present invention contains the above-described slipping agent, the content thereof in the thermoplastic resin composition is usually from 0.01 to 2 % by weight, and preferably from 0.05 to 0.5 % by weight.

[Production Method of Thermoplastic Resin Composition]

The method for obtaining the thermoplastic resin composition of the present invention is not particularly limited as long as the raw material components are uniformly dispersed. That is, a thermoplastic resin composition having uniformly dispersed therein respective components can be obtained by mixing, simultaneously or in an arbitrary order, the above-described respective raw material components. At the time of production of the thermoplastic resin composition of the present invention, in the case of obtaining the thermoplastic resin composition by blending the components (A) to (C) as well as the component (D) blended as needed and other components, these respective components are mixed by various known means, for example, by using a tumbler blender, a V-blender, a ribbon blender or a Henschel mixer, and after the mixing, melt-kneaded using a single-screw extruder, a twin-screw extruder, a Banbury mixer, a kneader, *etc.,* and the thermoplastic resin composition can thereby be obtained.

The mixing method and mixing conditions at the time of mixing the above-described respective raw material components are not particularly limited as long as respective raw material components are uniformly mixed, but in view of productivity, known melt-kneading methods, for example, a continuous kneader such as single-screw extruder or twin-screw kneader, and a batch kneader such as mill roll, Banbury mixer or pressure kneader, are preferred. The melting/mixing temperature may be sufficient if it is a temperature causing at least one of respective raw material components to enter the molten state, but a temperature causing all components to be melted is usually selected. In the present invention, the melting/mixing may be performed usually at 180 to 300°C.

[Film Molding]

The thermoplastic resin composition of the present invention can be easily film-formed as a sealing layer (film for a sealing layer) by various film molding methods such as extrusion lamination molding, T-die molding and air-cooling inflation molding. The thickness of the film for the sealing layer is usually from 2 to 100 μm, preferably from 5 to 30 μm. The thickness of the sealing layer is preferably in the range above, for example, from the viewpoint of obtaining sufficient heat seal strength, from the viewpoint of obtaining cohesive peelability, and in the application to a cover member of an easily openable container, from the viewpoint of providing the cover member with a thickness in a proper range.

[Cover Member·Easily Openable Container]

A cover member can be obtained by forming a sealing layer (a film for the sealing layer) composed of the thermoplastic resin composition of the present invention. The cover member uses the thermoplastic resin composition of the present invention as a sealing layer (a film for the sealing layer) and is usually laminated and integrated with a substrate and thereby enabled to be suitably used as an easily openable container having a cover member. In this case, the thickness of the sealing layer or the film for the sealing layer is usually from 2 to 100 μm, and preferably from 5 to 30 μm. If the thickness of the sealing layer is too small, sufficient heat seal strength cannot be obtained, and the cohesive peelability is also poor, but if the thickness is excessively large, the thickness of the cover member disadvantageously becomes large in the application to a cover member of various easily openable containers. In addition, a polyolefin-based resin layer such as polyethylene and polypropylene may be allowed to intervene, as a holding layer, between the film for the sealing layer and the substrate. The thickness of the holding layer is usually from 5 to 500 μm, particularly on the order of 10 to 100 μm.

As the substrate of the cover member, for example, aluminum foil, paper, a polyester-based resin film (e.g., a stretched polyester film) typified by polyethylene terephthalate, a stretched nylon film, an olefin-based resin film (e.g., a stretched polypropylene film) such as polyethylene or polypropylene, a polystyrene film, a silica-deposited stretched polyester film, an aluminum-deposited stretched film, and other barrier films may be applied as long as they are used in general as a substrate of soft packaging materials, and an optimal substrate may be appropriately selected and used according to the contents or usage.

The method for laminating and integrating the film for the sealing layer composed of the thermoplastic resin composition of the present invention with such a substrate includes, for example, a method of adhering the film by means of an adhesive such as polyurethane-based, polyester-based or polyether-based adhesive. In addition, a substrate film and a film for the sealing layer may be integrally molded by co-extrusion lamination molding.

The method for producing a cover member in which a holding layer is allowed to intervene between a film for the sealing layer and a substrate includes a method in which at the time of producing the thermoplastic resin composition of the present invention by film molding method such as inflation method or T-die method, the composition is molded by laminating it with a holding layer composed of a polyolefin-based resin such as polyethylene or polypropylene, a method in which a holding layer and a sealing layer are laminated/molded by co-extrusion lamination molding together with a polyolefin-based resin such as polyethylene or polypropylene and thereafter, a substrate is further affixed thereto, and a method in which the cover member is produced by forming a laminate film by extrusion lamination molding of a sealing layer and a holding layer on a substrate layer composed of aluminum foil, paper, or various thermoplastic resins such as polyester-based resin typified by polyethylene terephthalate or olefin-based resin (e.g., polyethylene, polypropylene).

The obtained cover member composed of a laminate film or laminate sheet of sealing layer/substrate or sealing layer/holding layer/substrate is disposed at an opening of various containers and heat-sealed along the flange part of the opening under heating and pressure and can thereby be used for hermetically sealing the container.

At this time, the heat sealing conditions are preferably a melting point of the component (A) or a temperature higher by about 50°C than the melting point according to the melting peak temperature of the component (A) used, for example, a temperature of approximately from 110 to 190°C, a pressure of 0.1 to 0.3 MPa, and a heat sealing time of approximately from 1 to 10 seconds.

The constituent material of the easily openable container to which the cover member using the thermoplastic resin composition of the present invention is applied, includes, for example, a polyethylene resin, a polypropylene resin, a polyethylene terephthalate resin, a polystyrene resin, a polycarbonate resin, and a blend thereof. Among these, the easily openable container is preferably composed of a polyethylene terephthalate resin.

The cover member having a sealing layer composed of the thermoplastic resin composition of the present invention and an easily openable container having the cover member can be suitably used in all applications requiring easy openability of a cover member but can be suitably used particularly for food and beverage containers.

EXAMPLES

Although the present invention is described more specifically below by referring to Examples and Comparative Examples, the present invention is not limited to the following Examples as long as the present invention does not exceed the gist thereof. In the following Examples, the values of various production conditions or evaluation results have a meaning as a preferable upper limit or lower limit value in the embodiment of the present invention, and the preferable range may be a range specified by a combination of the upper or lower limit value above and a value in the following Examples or a combination of values in Examples

[Raw Material]

The raw materials used in the following Examples and Comparative Examples are as follows.

<Component (A)>

A-1:

Crystalline polyester (polybutylene adipate terephthalate-based resin), "ECOFLEX (registered trademark)" (dicarboxylic acid unit: adipic acid unit: 54 mol%, terephthalic acid unit: 46 mol%, diol unit: 1,4-butanediol unit: 100 mol%, melting peak temperature: 121°C, glass transition temperature: -34°C), produced by BASF.
a-1 (for Comparative Example):
Crystalline polyester, "Vylon (registered trademark)" GM913 (dicarboxylic acid unit: terephthalic acid unit: 66 mol%, isophthalic acid unit: 34 mol%, diol unit: 1,4-butanediol unit: 82 mol%, polytetramethylene ether glycol unit: 18 mol%, melting peak temperature: 126°C, glass transition temperature: -70°C), produced by Toyobo Co., Ltd.

<Component (B)>

B-1:

Low-density polyethylene (LDPE) [density (JIS K7112) (1999): 0.919 g/cm$^3$, MFR [190°C, 2.16 kgf (JIS K7210) (2014)]: 4 g/10 min], produced by Japan Polyethylene Corp. B-2:
Low-density polyethylene (LDPE) [density (JIS K7112) (1999): 0.920 g/cm$^3$, MFR [190°C, 2.16 kgf (JIS K7210) (2014)]: 4 g/10 min], produced by Japan Polyethylene Corp.

<Component (C)>

C-1:
Styrene-based thermoplastic elastomer (hydrogenated styrene-butadiene-styrene block copolymer), "Tuftec (registered trademark) H1221" [1,2-bond amount: 78 mol%, 3,4-bond amount: 0, styrene content: 12 % by weight, MFR [230°C, 2.16 kgf (JIS K7210) (2014)]: 4.5 g/10 min, Shore-A hardness (JIS K6253) (1993): 42, hydrogenation rate: 99% or more], produced by Asahi Kasei Chemicals Corp.
C-2:
Styrene-based thermoplastic elastomer (hydrogenated styrene-butadiene-styrene block copolymer), "KRATON G1645MO" [1,2-bond amount: 70 mol%, 3,4-bond amount: 0, styrene content: 13 % by weight, MFR [230°C, 2.16 kgf (JIS K7210) (2014)]: 3.5 g/10 min, Shore-A hardness (JIS K6253) (1993): 35, hydrogenation rate: 98% or more], produced by Kraton Corp.

c-1 (for Comparative Example):
Styrene-based thermoplastic elastomer (hydrogenated styrene-butadiene-styrene block copolymer), "Tuftec (registered trademark) H1043" [1,2-bond amount: 30 mol%, 3,4-bond amount: 0, styrene content: 67 % by weight, MFR [230°C, 2.16 kgf (JIS K7210) (2014)]: 2 g/10 min, Shore-D hardness (JIS K6253) (1993): 72, hydrogenation rate: 99% or more], produced by Asahi Kasei Chemicals Corp.

<Component (D)>

D-1:
Amine-modified styrene-based thermoplastic elastomer (hydrogenated styrene-butadiene-styrene copolymer), "DYNARON (registered trademark) 4660P" [styrene content: 10 % by weight, MFR [230°C, 2.16 kgf (ISO 1133) (2011)]: 10 g/10 min, density (ISO 1183) (2012): 0.89 g/cm$^3$, glass transition temperature (ISO 11357-2) (2013): -56°C, Shore-A hardness (ISO 868) (2003): 83], produced by JSR Corp.

<Other Components>

E-1:
Slipping agent (erucic acid amide)

[Examples 1 to 6 and Comparative Examples 1 to 5]

<Preparation of Film for Evaluation>

For confirming the film moldability and easy openability (easy peelability), respective raw material components at the blending ratio shown in Table-1 were kneaded at 160 to 200°C by using a twin-screw extruder, "TEX30" (manufactured by Japan Steel Works, Ltd.), and a sealant film having a thickness of about 20 μm was formed on a polyester film by performing extrusion lamination molding under the following conditions by means of "Two-Species Two-Layer Test Laminator" (manufactured by Sumitomo Heavy Industries Modern, Ltd.) and used as a film for evaluation.

Molding temperature: 280°C
Screw rotation speed: 100 rpm
Haul-off speed: 50 m/min
Polyester film: "TOYOBO Ester (registered trademark) Film E5102" (thickness: 12 μm), produced by Toyobo Co., Ltd.
Die lip width: 370 mm

<Extrusion Lamination Deposition Stability>

The film stability when molding a film by extrusion lamination molding was checked with an eye and evaluated according to the following criteria. The results are shown in Table-1.

A: A film thickness fluctuation was not observed, and good spreadability was maintained.
B: A large film thickness fluctuation was observed.
C: A hole was generated on the film, and the film shape could not be maintained.

<Extrusion Lamination Moldability>

•Neck-in (NI)

The width of the film molded at the haul-off speed in the parenthesis of Table 1 by fixing the molding temperature, screw rotation speed and die lip width was defined as the neck-in (NI). A larger neck-in value leads to a wider effective product width and indicates excellent extrusion film moldability.

•Draw-down (DD)

When the molding temperature, screw rotation speed and die lip width were fixed and the haul-off speed was increased, the haul-off speed at which the molded film could not follow the moldability of the haul-off roll and the film was broken, making film molding impossible, was defined as the draw-down (DD). A larger draw-down value indicates excellent highspeed extrusion lamination moldability.

<Peel Strength (Heat Seal Strength)>

The film for evaluation and the following adherend were cut out into a size of 70 mm×100 mm, and the film for evaluation was placed on the adherend by arranging the sealant film side to come into contact with the adherend. The central portion in the length direction of the film for evaluation was heat-sealed in a width of 10 mm by performing heat sealing under the following conditions by means of a heat sealer (manufactured by Sagawa Manufacturing, Inc.).

Pressure: 0.2 MPa
Time: 1.0 seconds
Seal bar: 10 mm
Temperature: 130°C, 140°C, 150°C, or 160°C
Adherend: "NOVACLEAR (registered trademark) SG007" (A-PET sheet, thickness: 0.3 mm), produced by Mitsubishi Chemical Corp.

Thereafter, the heat seal strength was measured by pulling a no-heat-sealed portion of the film for evaluation and a no-heat-sealed portion of the adherend in directions running apart from each other to peel off the films. From the viewpoint of satisfying both easy openability and seal strength, the heat seal strength is preferably from 4 N/15 mm to less than 25 N/15 mm.

<Pealing Appearance>

The pealing appearance at the measurement of the heat seal strength at 160°C above was evaluated with an eye. The appearance was evaluated according to the following criteria.

A: When peeled off, no threading and good appearance were observed.
B: When peeled off, part of the sealant layer was not peeled off from the substrate, and threading was observed.
C: When peeled off, part of the sealant layer was not peeled off from the substrate, and threading was observed frequently.

The evaluation results are shown in Table-1.

[Table 1]

Table-1

| | | | Example | | | | | | Comparative Example | | | | |
|---|---|---|---|---|---|---|---|---|---|---|---|---|---|
| | | | 1 | 2 | 3 | 4 | 5 | 6 | 1 | 2 | 3 | 4 | 5 |
| Combination Composition [parts by weight] | Component (A) | A-1 | 70 (73.8) | 70 (73.8) | 70 (70) | 70 | 75 | 80 | 70 (73.8) | - | 85 | 60 | 65 |
| | | a-1 | - | - | - | - | - | - | - | 70 (73.8) | - | - | - |
| | Component (B) | B-1 | 11 (11.6) | 11 (11.6) | 20 (20) | 10 | 20 | 6 | 11 (11.6) | 11 (11.6) | 5 | 30 | 25 |
| | | B-2 | 3.8 (4.1) | 3.8 (4.1) | - | - | - | - | 3.8 (4.1) | 3.8 (4.1) | - | - | - |
| | Component (C) | C-1 | 10 (10.5) | - | 10 (10) | 20 | 5 | 14 | - | 10 | 10 | 10 | 10 |
| | | C-2 | - | 10 (10.5) | - | - | - | - | - | - | - | - | - |
| | | c-1 | - | - | - | - | - | - | 10 (10.5) | - | - | - | - |
| | Component (D) | D-1 | 5 (5.5) | 5 (5.5) | - | - | - | - | 5 (5.5) | 5 (5.5) | - | - | - |
| | Other Components | E-1 | 0.2 (0.2) | 0.2 (0.2) | - | - | - | - | 0.2 (0.2) | 0.2 (0.2) | - | - | - |

(continued)

| Evaluation | | | Example | | | | | | Comparative Example | | | | |
|---|---|---|---|---|---|---|---|---|---|---|---|---|---|
| | | | 1 | 2 | 3 | 4 | 5 | 6 | 1 | 2 | 3 | 4 | 5 |
| | Extrusion lamination deposition stability | | A | A | A | A | A | A | A | A | A | C | C |
| | Extrusion lamination film formation property | NI [mm] | 255 (50) | 255 (40) | 255 (50) | 275 (40) | 267 (40) | 213 (50) | 195 (40) | 180 (50) | 162 (50) | Molding was impossible. | |
| | | DD [m/min.] | 60 | 40 | 50 | 40 | 40 | 90< | 40 | 90< | 90< | | |
| | Peeling strength [N/15 mm] | 130°C | 11 | 9 | 10 | 10 | 20 | 24 | 9 | 15 | 25 | | |
| | | 140°C | 14 | 20 | not measured | 11 | 21 | 23 | 12 | 15 | 25 | | |
| | | 150°C | 12 | 19 | not measured | 13 | 23 | 24 | 11 | 17 | 26 | | |
| | | 160°C | 16 | 20 | 10 | 14 | 23 | 24 | 11 | 20 | 25 | | |
| | Peeling appearance | | A | A | C | C | C | C | A | C | C | | |

*The parenthesized numeral in each component indicates parts by weight per 100 parts by weight of total of component (A), component (B) and component (C). *"-" in each component indicates the component was not used.
*The parenthesized numeral in neck-in (NI) indicates the haul-off speed (unit: m/min).

<Evaluation Results>

As shown in Table-1, it is understood that in Examples 1 to 6 corresponding to the thermoplastic resin composition of the present invention, the extrusion lamination moldability and peeling strength were excellent. Among others, in Examples 1 and 2 using "D-1" corresponding to the component (D), the peeling appearance was also good.

On the other hand, in Comparative Example 1 using "c-1" in place of "C-1" in Example 1, the value of neck-in (NI) was low compared with Examples 1 to 6. In Comparative Example 2 using "a-1" in place of "A-1" in Example 1, the value of neck-in (NI) was low in comparison with Examples 1 to 6. In Comparative Example 3 in which the component (A) was blended in a larger amount than in the thermoplastic resin composition of the present invention, the value of neck-in (NI) was smaller than in Examples 1 to 6 and not only the adhesive strength was strong but also the easy peelability was poor. In Comparative Examples 4 and 5 in which the component (B) was used in a larger amount than in the thermoplastic resin composition of the present invention, the moldability was poor, and various evaluations could not be conducted.

While the invention has been described in detail and with reference to specific embodiments thereof, it will be apparent to one skilled in the art that various changes and modifications can be made therein without departing from the scope of the invention. This application is based on Japanese Patent Application (Patent Application No. 2015-042802) filed on March 4, 2015.

**Claims**

1. A thermoplastic resin composition comprising the following components (A) to (C) and, relative to the total amount thereof, containing from 60 to 84 % by weight of the component (A), from 3 to 23 % by weight of the component (B), and from 3 to 28 % by weight of the component (C):

   Component (A): a crystalline polyester containing an aliphatic dicarboxylic acid unit and having a melting peak temperature in the range of 110 to 140°C measured in conformity with JIS K7121 (1987) as described in the present specification
   Component (B): at least either one of a polyolefin and an amorphous polyester
   Component (C): a styrene-based thermoplastic elastomer which is at least one block copolymer out of the group consisting of a block copolymer having a polymer block P derived from a vinyl aromatic compound and a polymer block Q derived from a conjugated diene, and a block copolymer obtained by hydrogenating the block copolymer above and in which the total amount of a 1,2-bond unit and a 3,4-bond unit in the block Q is 60 mol% or more.

2. The thermoplastic resin composition according to claim 1, wherein the glass transition temperature of the component (A) is from -50 to -20°C measured in conformity with JIS K7121 (1987) as described in the present specification.

3. The thermoplastic resin composition according to claim 1 or 2, wherein the component (A) contains an adipic acid unit and a terephthalic acid unit.

4. The thermoplastic resin composition according to any one of claims 1 to 3, wherein the component (A) contains a 1,4-butanediol unit.

5. The thermoplastic resin composition according to any one of claims 1 to 4, wherein the styrene content of the component (C) is from 5 to 70 % by weight.

6. The thermoplastic resin composition according to any one of claims 1 to 5, wherein a polyethylene having a density of 0.850 to 0.980 g/cm$^3$ is contained as the component (B).

7. The thermoplastic resin composition according to any one of claims 1 to 6, wherein the following component (D) is contained and the content thereof is from 1 to 15 parts by weight per 100 parts by weight of the total of the component (A), the component (B) and the component (C).
   Component (D): an amine-modified styrene-based thermoplastic elastomer.

8. A cover member comprising a sealing layer comprising the thermoplastic resin composition according to any one of claims 1 to 7.

9. The cover member according to claim 8, wherein the sealing layer is formed by extrusion lamination molding.

10. An easily openable container comprising the cover member according to claim 8 or 9.

11. An easily openable container comprising the cover member according to claim 8 or 9 and a container comprising a polyethylene terephthalate resin.

**Patentansprüche**

1. Thermoplastische Harzzusammensetzung, die die folgenden Komponenten (A) bis (C) umfasst und, bezogen auf die Gesamtmenge davon, 60 bis 85 Gew.-% der Komponente (A), 3 bis 23 Gew.-% der Komponente (B) und 3 bis 28 Gew.-% der Komponente (C) enthält:

Komponente (A): einen kristallinen Polyester, der eine aliphatische Dicarbonsäureeinheit enthält und eine Schmelzpeaktemperatur im Bereich von 110 bis 140°C, gemessen in Übereinstimmung mit JIS K7121 (1987) wie in der vorliegenden Beschreibung beschrieben, aufweist
Komponente (B): mindesten eines von einem Polyolefin und einem amorphen Polyester
Komponente (C): ein styrolbasiertes thermoplastisches Elastomer, das mindestens ein Blockcopolymer aus der Gruppe, bestehend aus einem Blockcopolymer mit einem Polymerblock P, der von einer aromatischen Vinylverbindung abgeleitet ist, und einem Polymerblock Q, der von einem konjugierten Dien abgeleitet ist, und einem Blockcopolymer, das durch Hydrieren des vorstehenden Blockcopolymers erhalten wird und in dem die Gesamtmenge einer 1,2-Bindungseinheit und einer 3,4-Bindungseinheit in dem Block Q 50 mol-% oder mehr beträgt, ist.

2. Thermoplastische Harzzusammensetzung gemäß Anspruch 1, wobei die Glasübergangstemperatur der Komponente (A) -50 bis -20°C, gemessen in Übereinstimmung mit JIS K7121 (1987) wie in der vorliegenden Beschreibung beschrieben, beträgt.

3. Thermoplastische Harzzusammensetzung gemäß Anspruch 1 oder 2, wobei die Komponente (A) eine Adipinsäureeinheit und eine Terephthalsäureeinheit enthält.

4. Thermoplastische Harzzusammensetzung gemäß irgendeinem der Ansprüche 1 bis 3, wobei die Komponente (A) eine 1,4-Butandioleinheit enthält.

5. Thermoplastische Harzzusammensetzung gemäß irgendeinem der Ansprüche 1 bis 4, wobei der Styrolgehalt der Komponente (C) 5 bis 70 Gew.-% beträgt.

6. Thermoplastische Harzzusammensetzung gemäß irgendeinem der Ansprüche 1 bis 5, wobei ein Polyethylen mit einer Dichte von 0,850 bis 0,980 g/cm$^3$ als die Komponente (B) enthalten ist.

7. Thermoplastische Harzzusammensetzung gemäß irgendeinem der Ansprüche 1 bis 6, wobei die folgende Komponente (D) enthalten ist und sein Gehalt 1 bis 15 Gewichtsteile pro insgesamt 100 Gewichtsteile der Komponente (A), der Komponente (B) und der Komponente (C) beträgt.
Komponente (D): ein Amin-modifiziertes styrolbasiertes thermoplastisches Elastomer.

8. Abdeckelement, umfassend eine Siegelschicht, umfassend die thermoplastische Harzzusammensetzung gemäß irgendeinem der Ansprüche 1 bis 7.

9. Abdeckelement gemäß Anspruch 8, wobei die Siegelschicht durch Extrusionslaminierungsformen gebildet ist.

10. Leicht zu öffnender Behälter, umfassend das Abdeckelement gemäß Anspruch 8 oder 9.

11. Leicht zu öffnender Behälter, umfassend das Abdeckelement gemäß Anspruch 8 oder 9 und einen Behälter, umfassend ein Polyethylenterephthalatharz.

**Revendications**

1. Composition de résine thermoplastique comprenant les composants (A) à (C) suivants et, par rapport à sa quantité totale, contenant de 60 à 84 % en poids du composant (A), de 3 à 23 % en poids du composant (B), et de 3 à 28 % en poids du composant (C) :

Composant (A) : un polyester cristallin contenant un motif d'acide dicarboxylique aliphatique et présentant une température de pic de fusion dans la plage de 110 à 140°C mesurée conformément à JIS K7121 (1987) comme décrit dans la présente description
Composant (B) : au moins un parmi une polyoléfine et un polyester amorphe
Composant (C): un élastomère thermoplastique à base de styrène qui est au moins un copolymère à blocs du groupe constitué par un copolymère à blocs présentant un bloc polymère P dérivé d'un composé aromatique de vinyle et un bloc polymère Q dérivé d'un diène conjugué, et un copolymère à blocs obtenu par hydrogénation du copolymère à blocs ci-dessus et dans lequel la quantité totale d'un motif de liaison 1,2 et d'un motif de liaison 3,4 dans le bloc Q est de 60 % en mole ou plus.

2. Composition de résine thermoplastique selon la revendication 1, dans laquelle la température de transition vitreuse du composant (A) est de -50 à -20°C mesurée conformément à JIS K7121 (1987) comme décrit dans la présente description.

3. Composition de résine thermoplastique selon la revendication 1 ou 2, dans laquelle le composant (A) contient un motif d'acide adipique et un motif d'acide téréphtalique.

4. Composition de résine thermoplastique selon l'une quelconque des revendications 1 à 3, dans laquelle le composant (A) contient un motif de 1,4-butanediol.

5. Composition de résine thermoplastique selon l'une quelconque des revendications 1 à 4, dans laquelle la teneur en styrène du composant (C) est de 5 à 70 % en poids.

6. Composition de résine thermoplastique selon l'une quelconque des revendications 1 à 5, dans laquelle un polyéthylène présentant une densité de 0,850 à 0,980 g/cm$^3$ est contenu en tant que composant (B).

7. Composition de résine thermoplastique selon l'une quelconque des revendications 1 à 6, dans laquelle le composant (D) suivant est contenu et sa teneur est de 1 à 15 parties en poids pour 100 parties en poids du total du composant (A), du composant (B) et du composant (C).
Composant (D) : un élastomère thermoplastique à base de styrène modifié par amine.

8. Élément de couvercle comprenant une couche de scellement comprenant la composition de résine thermoplastique selon l'une quelconque des revendications 1 à 7.

9. Élément de couvercle selon la revendication 8, dans lequel la couche de scellement est formée par moulage par stratification par extrusion.

10. Récipient à ouverture facile comprenant l'élément de couvercle selon la revendication 8 ou 9.

11. Récipient à ouverture facile comprenant l'élément de couvercle selon la revendication 8 ou 9 et un récipient comprenant une résine de polyéthylène téréphtalate.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005335818 A
- JP 2008007146 A
- JP 2013075718 A
- JP 2006117247 A
- JP 4023798 B
- JP 428704 B
- JP 436636 B
- JP 59133203 A
- JP 60079005 A
- JP 2007154014 A
- JP 2015042802 A